# EUROPÄISCHE PATENTSCHRIFT

(11) **EP 0 496 197 B1**
(45) Veröffentlichungstag und Bekanntmachung des Hinweises auf die Patenterteilung: **12.06.1996**
(21) Anmeldenummer: 92100096.4
(22) Anmeldetag: 07.01.1992
(51) Int. Cl.: F16D 1/06, F16B 3/00

(54) **Flanschverbindung, insbesondere für Antriebswellen in Kraftfahrzeugen**
Flanged joint, especially for motor vehicle drive shafts
Raccord à brides, notamment pour arbres de transmission de véhicules automobiles

(30) Priorität: 21.01.1991 DE 4101561
(43) Veröffentlichungstag der Anmeldung: 29.07.1992
(73) Patentinhaber: GKN Automotive AG, D-5204 Lohmar (DE)
(72) Erfinder: Arand, Ernst-Bernhard, W-5810 Witten (DE); Zoppke, Hartmut, Dr., W-4300 Essen 1 (DE)
(74) Vertreter: Harwardt, Günther, Dipl.-Ing.

(56) Entgegenhaltungen:
- WO-A-87/07073
- CH-A- 240 852
- DE-C- 3 531 822
- FR-A- 2 177 408
- GB-A- 8 470
- US-A- 2 303 031

## Beschreibung

Die Erfindung betrifft eine Flanschverbindung zur Verbindung zweier Wellenflansche, insbesondere in Kraftfahrzeugantrieben, die mit stirnseitigen Verzahnungen zur Drehmomentübertragung versehen und über Spannmittel axial gegeneinander verspannt gehalten sind, wobei die Spannmittel an den zu verbindenden Flanschen angebrachte und einander gegenüberliegende korrespondierende Keilflächen mit Anpreßflächen aufweisen, welche sich voneinander keilförmig entfernend verlaufen, und wobei die Spannmittel Verbindungsmittel aufweisen, die zur Erzielung einer Wirkverbindung mit den Anpreßflächen entsprechend gestaltet sind und an diesen angreifen.

Eine solche Flanschverbindung ergibt sich aus der US-A-2 303 031. Danach ist es ferner vorgesehen, zwei Wellen an ihren einander zugewandten Enden mit Verdickungen zu versehen, die Schrägflächen aufweisen, die sich radial nach außen einander annähern und als Kegelflächen gestaltet sind. Die Keilflächen verlaufen um die Welle herum. Von außen ist ein mehrfach geteilter Ring aufgesetzt, der entsprechende Flächen aufweist, beide Wellenabschnitte übergreift und diese gegeneinander verspannt. Zur Verspannung der Kreisringabschnitte des geteilten Ringes gegeneinander dienen Schrauben.

In der DE C 35 31 822 ist eine Flanschverbindung mit kegelförmigen Verbindungsmitteln beschrieben, welche lediglich dafür sorgen, daß die beiden Flansche axial zueinander gehalten werden. Ein axiales Verspannen der Verzahnungen der Flansche gegeneinander ist nicht möglich.

Aus der GB-A-8470 / 1911 ist es bekannt, in die gegenüberliegenden Stirnflächen von zwei Flanschen ausgehend von den Stirnflächen hinterschnittene Nuten einzuarbeiten. Die Nuten kreuzen die Drehachse der Flansche mit Abstand und sind zu den Außenumfangsflächen der Flansche offen. Die sich gegenüberliegenden Nuten sind im Querschnitt schwalbenschwanzförmig gestaltet. Der Querschnitt der Nuten bleibt über deren Länge konstant. In jeweils zwei gegenüberliegenden Nuten ist ein gemeinsamer Keil eingeschoben, der die beiden Flansche axial miteinander verbindet.

Die Keile sind gegen Herausfallen durch eine aufgeschraubte Hülse gesichert. Die Keile übertragen das Drehmoment zwischen den beiden Flanschen. Damit ist die Verbindung sowohl in Axialrichtung als auch in Drehrichtung spielbehaftet. Dies kann zu einem Ausschlagen der Verbindung führen.

In der WO-A87/07073 ist eine Zündspule beschrieben, bei der der aus Blechlamellen zusammengefügte Kern durch eine metallene Klammer zusammengehalten wird. Dazu weisen die Blechlamellen jeweils zwei beabstandete Bohrungen auf, die durch einen Schlitz verbunden sind. Die Klammer hat zwei durch einen Steg verbundene Stifte. Die Verbindung wird durch Einschieben der Klammer und einen konischen Anzug erreicht.

Aus der DE -U- 87 15 364 ist es bekannt, die Peripherie von miteinander zu verbindenden Flanschen durch zwei gegeneinander gerichtete teiltorusförmige Schalen, die wiederum zu einem Torus zusammensetzbar sind, miteinander zu verbinden. Für eine derartige Flanschverbindung wird jedoch ein vergrößerter radialer Bauraum benötigt, der in Fahrzeugen nicht zur Verfügung steht. Außerdem bedeutet ein derartiger Torus eine zusätzlich rotierende Masse, die bei den zu erwartenden hohen Drehzahlen zu Unwuchten führen kann.

Aus der DE -A- 31 49 156 A1 ist es bekannt, die Flansche einer Flanschverbindung mit Bunden zu versehen, auf die Spannklauen aufgeschrumpft werden. Auch derartige Spannklauen bedeuten einerseits eine Vergrößerung der rotierenden Massen, andererseits bedeutet das Aufschrumpfen der Spannklauen einen erheblichen Energieaufwand für die Erwärmung und Montageaufwand.

Flanschverbindungen werden beispielsweise im Kraftfahrzeugbau dazu eingesetzt, um Kreuzgelenkwellen, die endseitig mit Mitnehmerflanschen versehen sind, mit entsprechenden Gegenflanschen im Kraftfahrzeug antriebsmäßig zu verbinden. Derartige Verbindungen werden allgemein durch Verschrauben hergestellt. Durch die immer kompakter werdende Bauweise wird jedoch die Zugänglichkeit von Schrauben mehr und mehr beschränkt. Außerdem eignen sich derartige Verschraubungen nicht für eine Automatisierung der Montage.

Aufgabe der vorliegenden Erfindung ist es, eine Flanschverbindung der eingangs beschriebenen Art zu schaffen, die einfach in ihrem Aufbau ist und eine leicht zugängliche Schnellverbindung zwischen Wellenflanschen ermöglicht.

Diese Aufgabe wird erfindungsgemäß dadurch gelöst, daß die Anpreßflächen der Keilflächen von sich keilförmig entfernenden Keilnuten gebildet sind, daß die Keilnuten jeweils ein Paar bilden, dessen Längsachse tangential zur Rotationsachse verläuft, wobei die Keilnuten symmetrisch zur Längsachse verlaufen und sich dieser annähern, daß die Verbindungsmittel als Verbindungskeile oder keilförmige Klammern ausgebildet sind und daß die Verbindungsmittel in der verspannten Position gesichert sind.

Durch diese Maßnahme wird eine verschraubungsfreie Verbindung zwischen zwei Flanschen geschaffen, die eine Schnellbefestigung ermöglicht und bei der Montage am Kraftfahrzeug eine seitliche Zugänglichkeit ermöglicht. Eine derartige Flanschverbindung ist vorspannbar und kann mit einfachen Mitteln von Hand vormontiert werden. Die miteinander zu verbindenden Flansche sind stirnseitig mit Verzahnungen zur Drehmomentübertragung versehen, so daß die Verbindung drehmomentfrei ist. Dadurch wird eine sehr direkte Kraftübertragung von der Lagerung bis zu den Gegenflanschen möglich. Es werden dadurch ferner kurze Baulängen und eine hohe Steifigkeit erreicht. Die Kreuzverzahnung an den Stirnseiten der zu verbindenden Flansche kann in einen für den Kraftfluß güngstigen Bereich gelegt werden und es lassen sich Unwuchten verringern.

Bei einer bevorzugten Ausführungsform ist es vorgesehen, daß die einander gegenüberliegenden Keilnuten Bestandteil von seitlichen Keilführungen sind, die mit gegeneinandergerichteten Anpreßflächen als Keilflächen versehen sind.

Ferner ist vorgesehen, daß die seitlichen Keilführungen im Querschnitt zusammen jeweils eine doppelte T-, Schwalbenschwanzoder Keulenform aufweisen.

Bei einer anderen Ausführungsform ist vorgesehen, daß die miteinander zu verbindenden Flansche peripher mit seitlichen Bunden versehen sind, die die gegeneinander gerichteten Keilnuten aufweisen, und daß die Flansche durch keilförmige, im Querschnitt C-förmige Klammern gegeneinander verspannbar sind.

Vorzugsweise sind jeweils zwei Keilflächen paarweise diametral verlaufend angeordnet.

Zur Sicherung der Flanschverbindung ist es vorgesehen, die keilförmigen Verbindungsmittel durch Kraftschluß selbsthemmend zu den Keilflächen in Wirkverbindung zu halten, bzw. die keilförmigen Verbindungsmittel durch Verpressen oder Verzahnung formschlüssig zu den Keilflächen in Wirkverbindung zu halten.

Die Erfindung ist anhand von zwei Ausführungsbeispielen in der beiliegenden Zeichnung dargestellt und wird nachfolgend näher beschrieben.

Es zeigt
- Figur 1: die Längsansicht, teilweise geschnitten, einer längenveränderbaren Kreuzgelenkwelle, die beidendig mit Anschlußflanschen zur Verbindung mit Gegenflanschen versehen ist,
- Figur 2: eine Detaildarstellung der Verbindung zwischen einem gelenkwellenseitigen Anschlußflansch und einem Gegenflansch, mit tangential verlaufenden T-förmig ausgebildeten Verbindungsmitteln;
- Figur 3: einen Schnitt entsprechend der Linie III-III von Figur 2 durch die Verbindungsmittel;
- Figur 4: eine Verbindung zwischen einem gelenkwellenseitigen Anschlußflansch und einem Gegenflansch durch tangential verlaufende seitliche Bunde, die von keilförmigen Klammern übergriffen sind;
- Figur 5: eine Seitenansicht der Flanschverbindung nach der Figur 4;
- Figur 6: einen Innenkeilquerschnitt für die keilförmigen Verbindungsmittel nach den Figuren 2 und 3 als Schwalbenschwanz;
- Figur 7: einen Innenkeilquerschnitt für die keilförmigen Verbindungsmittel nach den Figuren 2 und 3 als Keulenform.

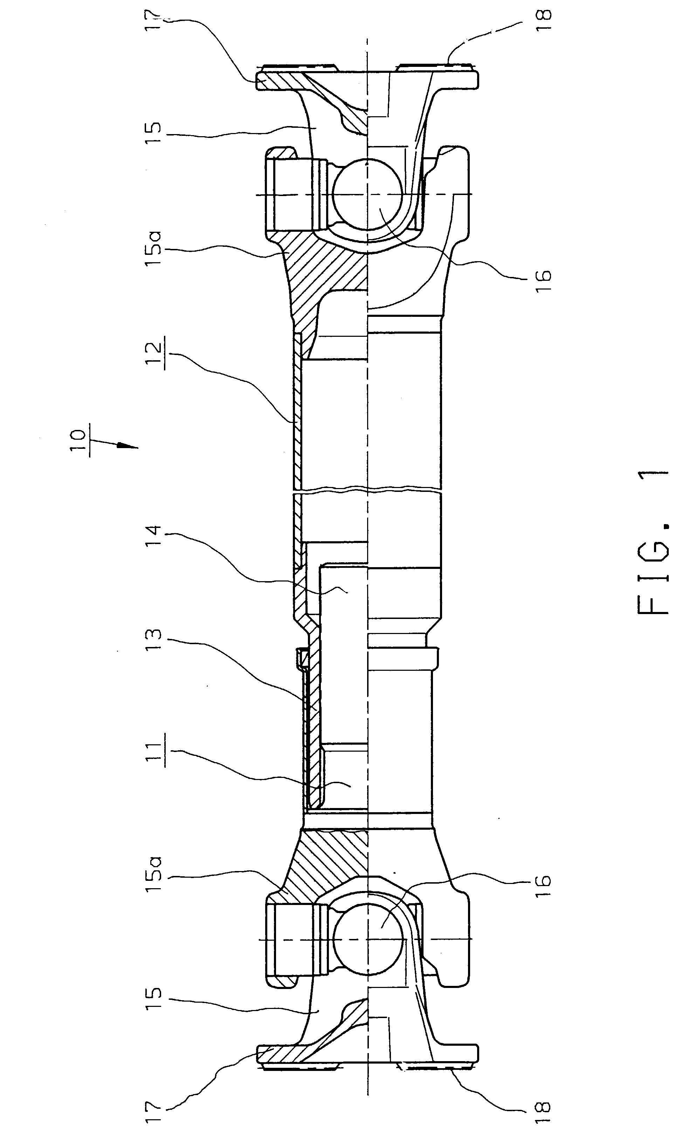

Die in der Figur 1 dargestellte Gelenkwelle 10 besteht im wesentlichen aus einem ersten Wellenteil 11 und einem zweiten Wellenteil 12. Das zweite Wellenteil 12 weist eine Ausgleichshülse 13 auf, in der der profilierte Zapfen 14 zur Bildung eines Längenausgleichs verschiebbar, aber drehfest aufgenommen ist. Endseitig sind die Wellenteile 11 und 12 mit Gelenkgabeln 15a von Kreuzgelenken 16 versehen. Die Gelenkgabeln 15a der Kreuzgelenke 16 sind über jeweils ein Zapfenkreuz gelenkig mit den endseitigen Gelenkgabeln 15 verbunden. Die Gelenkgabeln 15 sind Bestandteil von Anschlußflanschen 17, die stirnseitige Verzahnungen 18 zur Drehmomentübertragung aufweisen und zur Verbindung mit Gegenflanschen gedacht sind.

Wie die Figur 2 zeigt, können die Anschlußflansche 17 über die Verzahnungen 18 mit entprechend ausgebildeten Gegenflanschen 19 verbunden werden, wobei die Gegenflansche 19 widerum mit einer An- oder Abtriebswelle 20 verbindbar sind.

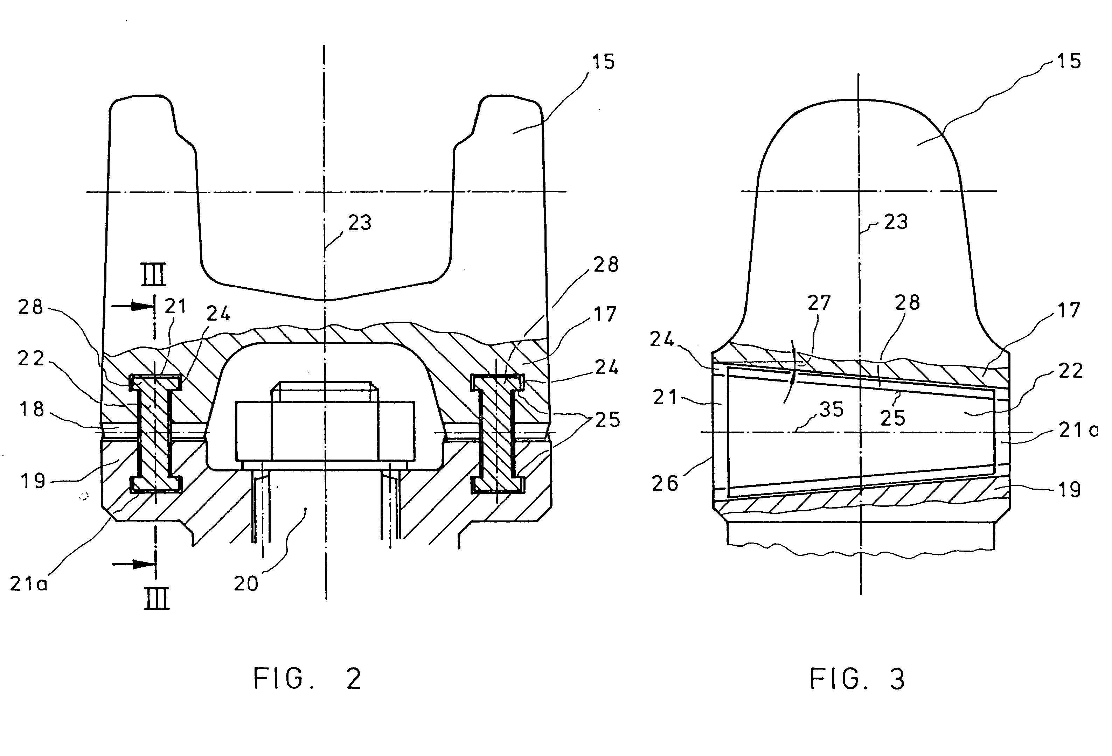

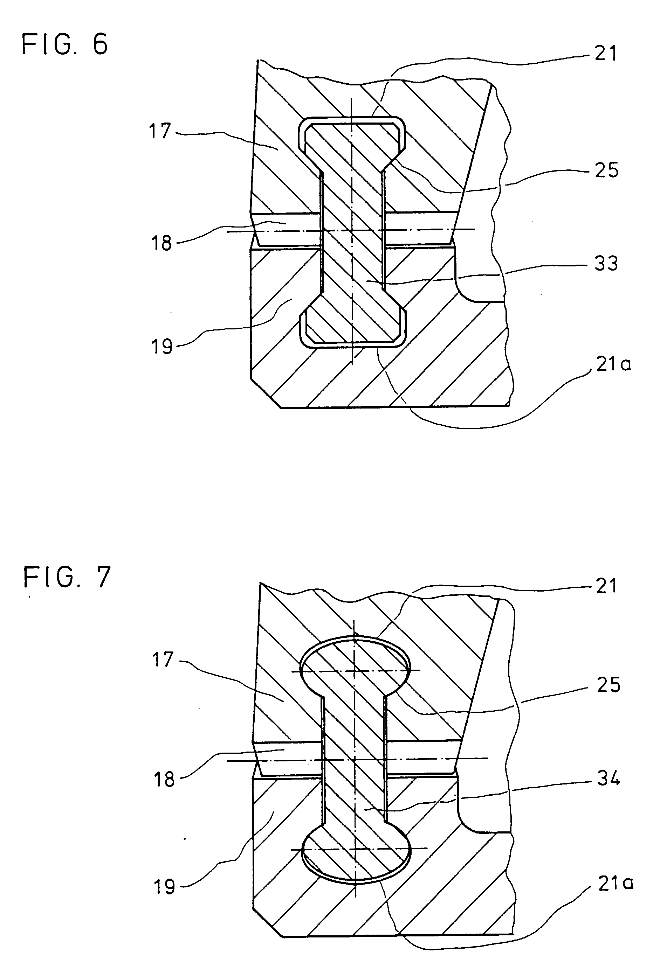

Wie aus Figur 2 und 3 ersichtlich, ist zur Verbindung der Anschlußflansch 17 mit tangential zur Rotationsachse 23 verlaufenden Keilnuten 21 und der Gegenflansch 19 mit ebenfalls tangential zur Rotationsachse 23 verlaufenden Keilnuten 21a versehen. Die Keilnuten 21 und 21a sind im Querschnitt jeweils T-förmig ausgebildet und bilden durch ihre korrespondierende Anordnung eine doppelte T-Form. In die ausgebildeten Keilnuten 21,21a können zur Verbindung des Anschlußflansches 17 mit dem Gegenflansch 19 Verbindungskeile 22 eingelegt werden. Die Keilnuten 21 und 21a sind paarweise ausgebildet und verlaufen beiderseits der Rotationsachse 23 mit ihrer Längsachse 35 tangential zu dieser. Die Keilnuten 21,21a sind symmetrisch zu ihrer Längsachse 35 ausgebildet, wobei sie sich der Längsachse 35 annähern. Ferner sind sie mit seitlich hinterschnittenen Keilführungen 24 versehen. Die Keilführungen 24 bilden in Richtung der Rotationsachse 23 gegeneinandergerichtete Anpreßflächen 25 zur Aufnahme von seitlichen Keilstegen 28 der einzusetzenden Verbindungskeile 22.Die Keilnuten 21,21a öffnen sich zur Öffnungsseite 26 hin mit dem Keilwinkel 27. Die Keilnuten 21,21a können, wie in der Figur 6 dargestellt ist, im Querschnitt beidendig mit Schwalbenschwänzen 33 versehen sein. Bei einer anderen Ausführung, wie sie in der Figur 7 dargestellt ist, sind die Enden einer Keilnut 21 als Keulen 34 ausgebildet. Die Montageverbindung der beiden Anschlußflansche 17,19 erfolgt derart, daß diese entlang der Rotationsachse 23 aneinanderangenähert werden, bis der Verbindungskeil 22 mit seinem größten Öffnungsquerschnitt zwischen den Keilstegen 28 in die Keilführung 24, ausgehend von der der Öffnungsseite 26 gegenüberliegenden Öffnungsseite, eingeschoben werden kann. Beim weiteren Einschieben des Verbindungskeils 22 in Richtung der Öffnungsseite 26 nähern sich die Flansche 17,19 bis zum gegenseitigen Verspannen an. Alternativ ist es jedoch möglich, die Nutenform der Keilführungen 24 so zu gestalten, daß der Verbindungskeil 22 bei aneinanderliegenden Flanschen 17,19 eingeführt werden kann. Die mittig der radialen Erstreckung der Verzahnung 18 angebrachten Verbindungskeile 22 bewirken eine besonders günstige Verspannung durch Verteilung der Spannkräfte.

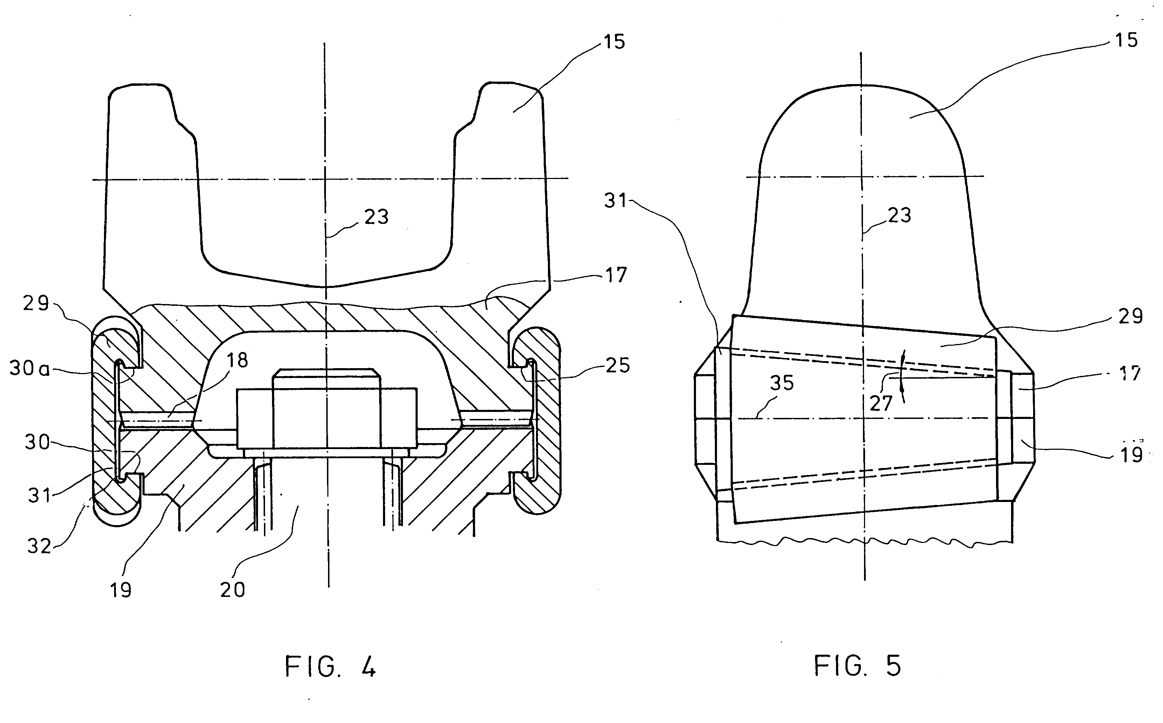

Bei einer anderen Ausführungsform, wie sie in den Figuren 4 und 5 dargestellt ist, sind der Anschlußflansch 17 und der Gegenflansch 19 mit peripher tangential verlaufenden keilförmigen Bunden 31 versehen. Diese seitlich tangential verlaufenden Bunde 31 weisen Vorsprünge 32 auf, durch die an dem Gegenflansch 19 tangential verlaufende Keilnuten 30 und an dem Anschlußflansch 17 tangential verlaufende Keilnuten 30a gebildet werden, wobei die Keilnuten 30,30a sich von der Anschlußebene der Flansche 17,19 entfernen. Zur Verbindung der Flansche 17 und 19 können über die Bunde 31 keilförmige Klammern 29 geschoben werden. Die Klammern 29 sind, wie die Figur 4 zeigt, im Querschnitt C-förmig ausgebildet, so daß die Bunde 31 von außen übergriffen werden. Die keilförmigen Klammern 29 kommen dabei mit den keilförmigen Keilnuten 30,30a in Wirkverbindung und halten durch ihre Vorspannung die Flansche 17 und 19 fest gegeneinander. Zur Sicherung der keilförmigen Klammern 29 können diese an ihren Öffnungsseiten auch durch Verstemmen, Schweißen oder Verkleben an den Flanschen 17,19 festgelegt werden. Auch diese keilförmigen Klammern 29 sind, wie die Figur 5 zeigt, symmetrisch zur ihren Längsachsen 35 ausgebildet. Die Keilnuten 30,30a liegen tangential zu der Rotationsachse 23 und sind so angeordnet, daß ihre Anpreßflächen 25 radial innerhalb der radialen Lagerbuchsenkontur in dem Flanschmitnehmer liegen.

## Patentansprüche

1. Flanschverbindung zur Verbindung zweier Wellenflansche (17, 19), insbesondere in Kraftfahrzeugantrieben, die mit stirnseitigen Verzahnungen (18) zur Drehmomentübertragung versehen und über Spannmittel axial gegeneinander verspannt gehalten sind, wobei die Spannmittel an den zu verbindenden Flanschen (17, 19) angebrachte und einander gegenüberliegende korrespondierende Keilflächen mit Anpreßflächen (25) aufweisen, welche sich voneinander keilförmig entfernend verlaufen, und wobei die Spannmittel Verbindungsmittel (22, 29) aufweisen, die zur Erzielung einer Wirkverbindung mit den Anpreßflächen (25) entsprechend gestaltet sind und an diesen angreifen,
dadurch gekennzeichnet,
daß die Anpreßflächen (25) der Keilflächen von sich keilförmig entfernenden Keilnuten (21, 21a; 30, 30a) gebildet sind, daß die Keilnuten (21, 21a, 30, 30a) jeweils ein Paar bilden, dessen Längsachse (35) tangential zur Rotationsachse (23) verläuft, wobei die Keilnuten (21, 21a; 30, 30a) symmetrisch zur Längsachse (35) verlaufen und sich dieser annähern, daß die Verbindungsmittel als Verbindungskeile (22) oder keilförmige Klammern (29) ausgebildet sind und daß die Verbindungsmittel (22) in der verspannten Position gesichert sind.

2. Flanschverbindung nach Anspruch 1,
dadurch gekennzeichnet,
daß die einander gegenüberliegenden Keilnuten (21, 21a) Bestandteil von seitlichen Keilführungen (24) sind, die mit gegeneinandergerichteten Anpreßflächen (25) als Xeilflächen versehen sind.

3. Flanschverbindung nach Anspruch 2,
dadurch gekennzeichnet,
daß die seitlichen Keilführungen (24) im Querschnitt zusammen jeweils eine doppelte T-, Schwalbenschwanz- oder Keulenform aufweisen.

4. Flanschverbindung nach Anspruch 1,
dadurch gekennzeichnet,
daß die miteinander zu verbindenden Flansche (17, 19) peripher mit seitlichen Bunden (31) versehen sind, die die gegeneinandergerichteten Keilnuten (30, 30a) aufweisen, und daß die Flansche (17, 19) durch keilförmige, im Querschnitt C-förmige Klammern (29) gegeneinander verspannbar sind.

5. Flanschverbindung nach einem der Ansprüche 1 bis 4,
dadurch gekennzeichnet,
daß jeweils zwei Keilflächen paarweise diametral verlaufend angeordnet sind.

6. Flanschverbindung nach Anspruch 1,
dadurch gekennzeichnet,
daß die keilförmigen Verbindungsmittel (22, 29) durch Kraftschlußselbsthemmend zu den Keilnuten (21, 21a; 30, 30a) gesichert sind.

7. Flanschverbindung nach Anspruch 1,
dadurch gekennzeichnet,
daß die keilförmigen Verbindungsmittel (22, 29) durch Verpressen oder Verzahnung formschlüssig mit den Keilnuten (21, 21a; 30, 30a) gesichert sind.

## Claims

1. A flange connection for connecting two shaft flanges (17, 19), especially in motor vehicle drives, which, for torque transmitting purposes, are provided with end teeth (18) and are held by tensioning means so as to be axially tensioned relative to one another, with the tensioning means comprising wedge faces with pressure faces (25) which extend away from one another in a wedge-like way and with the tensioning means comprising connecting means (22, 29) which, for the purpose of achieving an operating connection with the pressure faces (25), are shaped accordingly and act upon same,
characterised in
that the pressure faces (25) of the wedge faces are formed by keyways (21, 21a; 30, 30a) extending away from one another in a wedge-like way, that the keyways (21, 21a; 30, 30a) form pairs, with the longitudinal axis (35) of each pair extending tangentially relative to the rotational axis (23) and with the keyways (21, 21a; 30, 30) extending symmetrically relative to the longitudinal axis (35) and approaching same, that the connecting means are provided in the form of connecting wedges (22) or wedge-shaped clamps (29) and that the connecting means (22) are secured in the tensioned position.

2. A flange connection according to claim 1,
characterised in
that the opposed keyways (21, 21a) form part of side wedge-type guiding means (24) which are provided with opposed pressure faces (25) in the form of wedge faces.

3. A flange connection according to claim 2,
characterised in
that the side wedge-type guiding means (24), together, if viewed in a cross-section, comprise a double-T shape, swallow-tail shape or club shape.

4. A flange connection according to claim 1,
characterised in
that the flanges (17, 19) to be connected to one another, on their peripheries, are provided with side collars (31) comprising the opposed keyways (30, 30a) and that the flanges (17, 19) are tensionable relative to one another by wedge-shaped clamps (29) with a C-shaped cross-section.

5. A flange connection according to any one of claims 1 to 4,
characterised in
that two wedge faces each are arranged so as to form a pair and extend diametrically.

6. A flange connection according to claim 1,
characterised in
that the wedge-shaped connecting means (22, 29), by means of a force-locking connection, are secured in a self-inhibiting way relative to the keyways (21, 21a; 30, 30a).

7. A flange connection according to claim 1,
characterised in
that the wedge-shaped connecting means (22, 29) are form-fittingly secured to the keyways (21, 21a; 30, 30a) by pressure or teeth.

## Revendications

1. Liaison de brides pour relier deux brides d'arbre (17, 19), en particulier dans des transmissions de véhicule automobile, qui sont pourvues du côté frontal de dentures (18) pour la transmission du couple de rotation et qui sont retenues de façon axialement serrées l'une par rapport à l'autre au moyen d'organes de serrage, les organes de serrage présentant des surfaces en coin correspondantes agencées sur les brides (17, 19) à relier et situées en vis-à-vis l'une de l'autre avec des surfaces de pressage (25), qui s'étendent en forme de coin en éloignement l'une de l'autre, et les organes de serrage présentant des organes de liaison (22, 29) qui sont réalisés en correspondance pour atteindre une liaison active avec les surfaces de pressage (25), et qui attaquent celles-ci, caractérisée en ce que les surfaces de pressage (25) des surfaces en coin sont formées par des gorges en coin (21, 21a ; 30, 30a) s'éloignant l'une de l'autre en forme de coin, en ce que les gorges en coin (21, 21a ; 30, 30a) forment respectivement une paire dont l'axe longitudinal (35) s'étend tangentiellement à l'axe de rotation (23), les gorges en coin (21, 21a : 30, 30a) s'étendant de façon symétrique par rapport à l'axe longitudinal (35) et se rapprochant de celui-ci, en ce que les organes de liaison sont réalisés en tant que coins de liaison (22) ou de pinces (29) en forme de coin, et en ce que les organes de liaison (22) sont bloqués dans la position serrée.

2. Liaison de brides selon la revendication 1, caractérisée en ce que les gorges en coin (21, 21a) situées en vis-à-vis l'une de l'autre font partie de guidages en coin latéraux (24) qui sont pourvus de surfaces de pressage (25) dirigées l'une contre l'autre en tant que surfaces en coin.

3. Liaison de brides selon la revendication 2, caractérisée en ce que les guidages en coin latéraux (24) présentent en section transversale conjointement respectivement une forme en double T, une forme en double queue d'aronde, ou une forme en double lobe.

4. Liaison de brides selon la revendication 1, caractérisée en ce que les brides (17, 19) à relier l'une à l'autre sont pourvues en périphérie de colliers latéraux (31) qui présentent les gorges (30, 30a) dirigées l'une contre l'autre, et en ce que les brides (17, 19) peuvent être serrées l'une contre l'autre par des pinces (29) en forme de coin et en section transversale en forme de C.

5. Liaison de brides selon l'une quelconque des revendications 1 à 4, caractérisée en ce que deux surfaces en coin respectives sont agencées de manière à s'étendre diamétralement par paire.

6. Liaison de brides selon la revendication 1, caractérisée en ce que les organes de liaison (22, 29) en forme de coin sont bloqués par coopération de force avec auto-blocage par rapport aux gorges en coin (21, 21a : 30, 30a).

7. Liaison de brides selon la revendication 1, caractérisée en ce que les organes de liaison (22, 29) en forme de coin sont bloqués par pressage ou par denture en coopération de forme avec les gorges en coin (21, 21a : 30, 30a).
